# EUROPÄISCHE PATENTANMELDUNG

(11) **EP 2 908 292 A1**
(43) Veröffentlichungstag der Anmeldung: **19.08.2015**
(21) Anmeldenummer: 14155204.2
(22) Anmeldetag: 14.02.2014
(51) Int. Cl.: G07C 9/00

(54) **Zugangssystem für eine technische Anlage**

(71) Anmelder: Siemens Aktiengesellschaft, 80333 München (DE)
(72) Erfinder: Die Erfindernennung liegt noch nicht vor

(57) **Zusammenfassung**

Die Erfindung betrifft ein Zugangssystem für eine technische Anlage (1) und ein Verfahren zum Einstellen einer technischen Anlage (1) mittels eines derartigen Zugangssystems. Das Zugangssystem umfasst wenigstens ein Bedienelement (5), auf dem ein Berechtigungsniveau gespeichert ist, und ein Zugangsmodul (2) mit einer Drehvorrichtung und einer Leseeinheit. Die Drehvorrichtung ist in verschiedene Drehstellungen, die jeweils einer Einstellung der technischen Anlage (1) zugeordnet sind, drehbar. Die Leseeinheit ist zum Auslesen des Berechtigungsniveaus des Bedienelements (5) ausgebildet und das Zugangsmodul (2) ist dazu ausgebildet, dem Berechtigungsniveau eines Bedienelements (5) eine Drehstellungsmenge von Drehstellungen der Drehvorrichtung zuzuordnen und die Einstellung der technischen Anlage (1) entsprechend der Drehstellung der Drehvorrichtung zu initialisieren, sofern diese Drehstellung in der Drehstellungsmenge enthalten ist.

## Beschreibung

Die Erfindung betrifft ein Zugangssystem für eine technische Anlage und ein Verfahren zum Einstellen einer technischen Anlage.

Eine technische Anlage wird häufig durch ein Zugangssystem gegen unbefugten Zutritt gesichert. Dazu weist das Zugangssystem beispielsweise ein mechanisches Schloss, eine Transponder-Lesevorrichtung oder einen Magnetsensor auf. Ferner werden für Benutzer einer technische Anlage häufig Bedienungsberechtigungen für Bedienungselemente wie Stell- und/oder Schaltelemente zum Einstellen und Steuern der technischen Anlage vergeben, um nur Benutzern mit einer ausreichenden Bedienungsberechtigung das Einstellen und Steuern der technischen Anlage zu erlauben. Dazu wird beispielsweise nur Nutzern mit einer ausreichenden Bedienungsberechtigung der Zugriff auf entsprechende Bedienungselemente gewährt. Beispielsweise wird die Bedienungsberechtigung eines Benutzers bei oder nach dessen Zutritt zu der technischen Anlage erfasst und daraufhin werden diejenigen Bedienungselemente aktiviert, die der Bedienungsberechtigung des Benutzers entsprechen und von dem Benutzer zum Einstellen und Steuern der technischen Anlage verwendet werden können.

Der Erfindung liegt die Aufgabe zugrunde, ein verbessertes Zugangssystem für eine technische Anlage und ein verbessertes Verfahren zum Einstellen einer technischen Anlage anzugeben.

Die Aufgabe wird erfindungsgemäß hinsichtlich des Zugangssystems durch die Merkmale des Anspruchs 1 und hinsichtlich des Verfahrens durch die Merkmale des Anspruchs 7 gelöst.

Vorteilhafte Ausgestaltungen der Erfindung sind Gegenstand der Unteransprüche.

Ein erfindungsgemäßes Zugangssystem für eine technische Anlage umfasst wenigstens ein Bedienelement mit einem Transponder, auf dem ein Berechtigungsniveau gespeichert ist, und ein Zugangsmodul mit einer Drehvorrichtung und einer Leseeinheit. Die Drehvorrichtung ist in verschiedene Drehstellungen, die jeweils einer Einstellung der technischen Anlage zugeordnet sind, drehbar. Die Leseeinheit ist zum Auslesen des Berechtigungsniveaus des Bedienelements ausgebildet. Das Zugangsmodul ist dazu ausgebildet, dem Berechtigungsniveau eines Bedienelements eine Drehstellungsmenge von Drehstellungen der Drehvorrichtung zuzuordnen und die Einstellung der technischen Anlage entsprechend der Drehstellung der Drehvorrichtung zu initialisieren, sofern diese Drehstellung in der Drehstellungsmenge enthalten ist.

Ein erfindungsgemäßes Zugangssystem für eine technische Anlage ermöglicht also nicht nur den Zugang zu der technischen Anlage, sondern auch dessen Einstellung in Abhängigkeit von einem Berechtigungsniveau, das auf einem Bedienelement gespeichert ist. Die Drehvorrichtung des Zugangsmoduls ist in verschiedene Drehstellungen drehbar, welche jeweils einer Einstellung der technischen Anlage zugeordnet sind. Dadurch wird ein Benutzer durch das Bedienelement nicht nur zum Zutritt der technischen Anlage und zu einer dem Berechtigungsniveau entsprechenden Bedienung der technischen Anlage autorisiert, sondern der Benutzer kann die technische Anlage sogar mittels des Zugangssystems direkt einstellen, indem er die Drehvorrichtung in eine der Einstellung entsprechende Drehstellung dreht. Dies ermöglicht vorteilhaft eine gegenüber bekannten Zugangs- und Einstellungssystemen vereinfachte und schnellere Bedienung der technischen Anlage mittels eines erfindungsgemäßen Zugangssystems.

Eine Ausgestaltung der Erfindung sieht vor, dass die Drehstellungen der Drehvorrichtung über einen durch Drehen der Drehvorrichtung änderbaren Parameterwert jeweils einer Einstellung der technischen Anlage zugeordnet sind.

Dies ermöglicht vorteilhaft eine technisch besonders einfach realisierbare und auswertbare Zuordnung der Drehstellungen der Drehvorrichtung zu Einstellungen der technischen Anlage. Beispielsweise kann der Parameterwert auf einfache Weise durch eine Drehung der Drehvorrichtung in eine erste Drehrichtung monoton erhöht und durch eine Drehung der Drehvorrichtung in einer der ersten Drehrichtung entgegen gesetzte zweite Drehrichtung monoton verringert werden.

Dabei kann der Parameterwert durch Drehen der Drehvorrichtung analog oder digital änderbar sein.

Dies ermöglicht vorteilhaft die Anpassung an digitale oder analoge Geräte.

Eine weitere Ausgestaltung der Erfindung sieht vor, dass das Zugangsmodul mehrere digitale oder analoge Ausgänge aufweist, die jeweils in Abhängigkeit von der Drehstellung der Drehvorrichtung einstellbar sind.

Dadurch kann die Drehstellung der Drehvorrichtung vorteilhaft in ein einfach auswertbares Ausgangssignal des Zugangsmoduls umgesetzt werden.

Eine Weitergestaltung der vorgenannten Ausgestaltung der Erfindung sieht eine dem Zugangsmodul nachgeordnete Auswerteeinheit zur Einstellung der technischen Anlage in Abhängigkeit von einer Einstellung der Ausgänge des Zugangsmoduls vor.

Dies ermöglicht vorteilhaft eine Verwendung eines erfindungsgemäßen Zugangssystems für existierende technische Anlagen, indem beispielsweise lediglich die Ausgangsignale des Zugangsmoduls einer bereits vorhandenen Auswerteeinheit angepasst werden oder eine geeignete Auswerteeinheit zur Auswertung der Ausgangsignale des Zugangsmoduls installiert wird. Eine weitere Ausgestaltung der Erfindung sieht vor, dass das Zugangsmodul dazu ausgebildet ist, für wenigstens ein Bedienelement einen Parameterwert zu speichern und die Ausgänge bei einer Verwendung des Bedienelements entsprechend des für das Bedienelement gespeicherten Parameterwertes einzustellen.

Dadurch kann vorteilhaft für ein Bedienelement eine durch den gespeicherten Parameterwert charakterisierte Einstellung der Ausgänge des Zugangsmoduls voreingestellt werden.

Eine weitere Ausgestaltung der Erfindung sieht vor, dass das Zugangsmodul dazu ausgebildet ist, dem Berechtigungsniveau eines Bedienelements eine Funktion zuzuordnen und die Ausgänge des Zugangsmoduls entsprechend dieser Funktion einzustellen.

Dadurch kann einem Bedienelement vorteilhaft über sein Berechtigungsniveau eine Funktion zugeordnet werden und die Ausgänge des Zugangsmoduls können entsprechend dieser Funktion automatisch eingestellt werden.

Eine weitere Ausgestaltung der Erfindung sieht vor, dass das Zugangsmodul dazu ausgebildet ist, wenigstens einen Einstellungsparameter zu einer direkten Einstellung der technischen Anlage in Abhängigkeit von der Drehstellung der Drehvorrichtung auszugeben, sofern diese Drehstellung in der Drehstellungsmenge enthalten ist, die dem Berechtigungsniveau des Bedienelements zugeordnet ist.

Diese Ausgestaltung der Erfindung ermöglicht vorteilhaft eine direkte Einstellung einer technischen Anlage mittels eines Zugangsmoduls. Dies ist insbesondere vorteilhaft, wenn die technische Anlage noch keine geeignete Auswerteeinheit zur Auswertung von Signalen des Zugangsmoduls aufweist oder auf einfache und kostengünstige Weise eine vorhandene derartige Auswerteeinheit durch ein geeignetes Zugangsmodul ersetzt werden kann.

Eine weitere Ausgestaltung der Erfindung sieht vor, dass die Drehvorrichtung zu einer Aufnahme eines Bedienelements ausgebildet ist und das Zugangsmodul dazu ausgebildet ist, bei einer Aufnahme eines Bedienelements in der Drehvorrichtung wenigstens einen Einstellungsparameter zu einer Einstellung der technischen Anlage auszugeben.

Dadurch kann vorteilhaft wenigstens ein Einstellungsparameter auch durch Aufnahme eines Bedienelements in der Drehvorrichtung ausgegeben werden.

Bei dem erfindungsgemäßen Verfahren wird eine technische Anlage mittels eines erfindungsgemäßen Zugangssystems eingestellt. Dabei werden verschiedenen Drehstellungen der Drehvorrichtung jeweils eine Einstellung der technischen Anlage zugeordnet, einem Berechtigungsniveau eine Einstellungsmenge von Einstellungen der technischen Anlage zugeordnet, und das Berechtigungsniveau eines Bedienelements mittels des Zugangsmoduls ausgelesen. Ferner wird die technische Anlage entsprechend einer Drehstellung der Drehvorrichtung eingestellt, sofern diese Drehstellung einer Einstellung der technischen Anlage zugeordnet ist, die in der Einstellungsmenge enthalten ist, die dem ausgelesenen Berechtigungsniveau zugeordnet ist.

Ausgestaltungen des Verfahrens sehen vor, dass die Drehstellungen über einen durch Drehen der Drehvorrichtung änderbaren Parameterwert jeweils einer Einstellung der technischen Anlage zugeordnet werden. Vorzugsweise wird der Parameterwert dabei als Funktion eines Drehwinkels der Drehung der Drehvorrichtung monoton geändert.

Das erfindungsgemäße Verfahren ermöglicht die Einstellung einer technischen Anlage mittels eines erfindungsgemäßen Zugangssystems mit den oben bereits genannten Vorteilen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch ein Blockdiagramm eines ersten Ausführungsbeispiels eines Zugangssystem für eine technische Anlage, und
- FIG 2: schematisch ein Blockdiagramm eines zweiten Ausführungsbeispiels eines Zugangssystem für eine technische Anlage.

Einander entsprechende Teile sind in den Figuren mit den gleichen Bezugszeichen versehen.

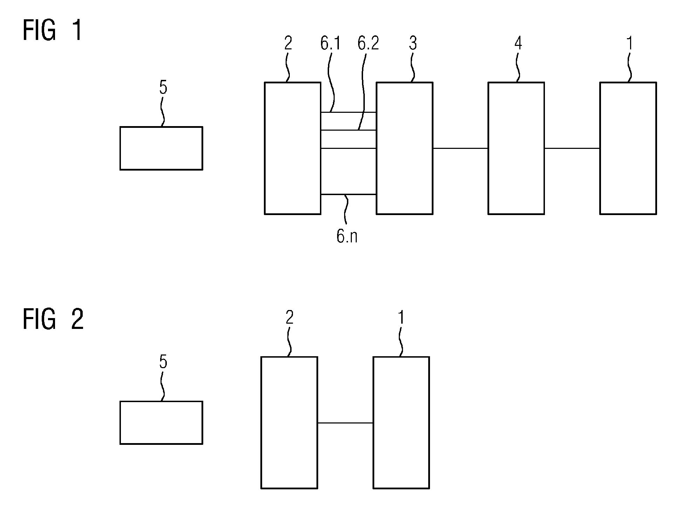

Figur 1 zeigt schematisch ein erstes Ausführungsbeispiel eines Zugangssystems für eine technische Anlage 1 anhand eines Blockdiagramms. Das Zugangssystem dieses Ausführungsbeispiels umfasst ein Zugangsmodul 2, ein DI/DO-Modul 3 (DI/DO = Digital Input/Digital Output), eine Auswerteeinheit 4 sowie wenigstens ein Bedienelement 5.

Das Zugangsmodul 2 weist eine Drehvorrichtung auf, in die das Bedienelement 5 eingeführt werden kann und die in verschiedene Drehstellungen drehbar ist. Jeder dieser Drehstellungen ist dabei eine Einstellung der technischen Anlage 1 zugeordnet.

Jedes Bedienelement 5 weist einen Transponder auf, auf dem ein Berechtigungsniveau gespeichert ist. Dabei können sich die Berechtigungsniveaus verschiedener Bedienelemente 5 voneinander unterscheiden. Jedem Berechtigungsniveau ist eine Drehstellungsmenge von Drehstellungen der Drehvorrichtung zugeordnet. Die Zuordnung der Berechtigungsniveaus zu den Drehstellungsmengen ist in dem Zugangsmodul 2 gespeichert.

Das Zugangsmodul 2 weist eine Leseeinheit auf, mittels derer das Berechtigungsniveau eines Bedienelements 5 auslesbar ist. Ferner weist das Zugangsmodul 2 mehrere digitale und oder analoge Ausgänge 6.1 bis 6.n auf, die jeweils in Abhängigkeit von der Drehstellung der Drehvorrichtung einstellbar sind. Jeder Drehstellung der Drehvorrichtung wird eine Einstellung der Ausgänge 6.1 bis 6.n zugeordnet.

Mittels der Leseeinheit des Zugangsmoduls 2 wird das Berechtigungsniveau eines Bedienelements 5 ausgelesen. Wenn die Drehvorrichtung in eine Drehstellung gedreht wird, wird mittels des Zugangsmoduls 2 geprüft, ob diese Drehstellung in derjenigen Drehstellungsmenge enthalten ist, die dem Berechtigungsniveau des Bedienelements 5 zugeordnet ist. Wenn das Ergebnis dieser Prüfung positiv ist, werden die Ausgänge 6.1 bis 6.n des Zugangsmoduls 2 mit der dieser Drehstellung der Drehvorrichtung zugeordneten Einstellung eingestellt.

Die Signale der Ausgänge 6.1 bis 6.n des Zugangsmoduls 2 werden dem DI/DO-Modul 3 zugeführt. Das DI/DO-Modul 3 erzeugt aus diesen Signalen ein Einstellungssignal für eine Einstellung der technischen Anlage 1, die der jeweiligen Drehstellung der Drehvorrichtung zugeordnet ist. Dieses Einstellungssignal wird der Auswerteeinheit 4 zugeführt, die die technische Anlage 1 diesem Einstellungssignal entsprechend einstellt.

Alternativ können statt digitaler Ausgänge 6.1 bis 6.n analoge Ausgänge 6.1 bis 6.n und statt eines DI/DO-Moduls 3 ein AI/AO-Modul (AI/AO = Analog Input/Analog Output) verwendet werden.

Eine Ausgestaltung dieses Ausführungsbeispiels sieht vor, dass die Drehstellungen der Drehvorrichtung über einen durch Drehen der Drehvorrichtung analog oder digital änderbaren Parameterwert jeweils einer Einstellung der technischen Anlage 1 zugeordnet werden. Beispielsweise wird der Parameterwert durch eine Drehung der Drehvorrichtung in eine erste Drehrichtung monoton erhöht und durch eine Drehung in eine der ersten Drehrichtung entgegen gesetzte zweite Drehrichtung monoton verringert. Um die Information zur Drehrichtung und Änderung des Parameterwerts an die Auswerteeinheit 4 zu übergeben, wird dabei beispielsweise ein Zeitintervall vorgegeben und das Zugangsmodul 2 schließt bei jeder Drehung der Drehvorrichtung einen der Ausgänge 6.1 bis 6.n für die Dauer des Zeitintervalls.

Figur 2 zeigt schematisch ein zweites Ausführungsbeispiel eines Zugangssystems für eine technische Anlage 1 anhand eines Blockdiagramms. Dieses Ausführungsbeispiel unterscheidet sich von dem in Figur 1 dargestellten ersten Ausführungsbeispiel dadurch, dass die Funktionen, die in dem ersten Ausführungsbeispiel von dem DI/DO-Modul 3 und der Auswerteeinheit 4 ausgeführt werden, von den Zugangsmodul 2 selbst ausgeführt werden. Das Zugangsmodul 2 dieses Ausführungsbeispiels ist daher dazu ausgebildet, wenigstens einen Einstellungsparameter zu einer direkten Einstellung der technischen Anlage 1 (digital oder analog) in Abhängigkeit von der Drehstellung der Drehvorrichtung auszugeben, sofern diese Drehstellung in der Drehstellungsmenge enthalten ist, die dem Berechtigungsniveau des 5 zugeordnet ist.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Zugangssystem für eine technische Anlage (1), umfassend
- wenigstens ein Bedienelement (5) mit einem Transponder, auf dem ein Berechtigungsniveau gespeichert ist,
- ein Zugangsmodul (2) mit einer Drehvorrichtung und einer Leseeinheit, wobei
- die Drehvorrichtung in verschiedene Drehstellungen, die jeweils einer Einstellung der technischen Anlage (1) zugeordnet sind, drehbar ist,
- die Leseeinheit zum Auslesen des Berechtigungsniveaus des Bedienelements (5) ausgebildet ist,
- und das Zugangsmodul (2) dazu ausgebildet ist, dem Berechtigungsniveau eines Bedienelements (5) eine Drehstellungsmenge von Drehstellungen der Drehvorrichtung zuzuordnen und die Einstellung der technischen Anlage (1) entsprechend der Drehstellung der Drehvorrichtung zu initialisieren, sofern diese Drehstellung in der Drehstellungsmenge enthalten ist.

2. Zugangssystem nach Anspruch 1,
**dadurch gekennzeichnet, dass** die Drehstellungen über einen durch Drehen der Drehvorrichtung änderbaren Parameterwert jeweils einer Einstellung der technischen Anlage (1) zugeordnet sind.

3. Zugangssystem nach Anspruch 2,
**dadurch gekennzeichnet, dass** der Parameterwert durch Drehen der Drehvorrichtung analog oder digital änderbar ist.

4. Zugangssystem nach einem der vorhergehenden Ansprüche,
**dadurch gekennzeichnet, dass** das Zugangsmodul (2) mehrere digitale oder analoge Ausgänge (6.1 bis 6.n) aufweist, die jeweils in Abhängigkeit von der Drehstellung der Drehvorrichtung einstellbar sind.

5. Zugangssystem nach Anspruch 4,
**gekennzeichnet durch** eine dem Zugangsmodul (2) nachgeordnete Auswerteeinheit (4) zur Einstellung der technischen Anlage (1) in Abhängigkeit von einer Einstellung der Ausgänge (6.1 bis 6.n) des Zugangsmoduls (2).

6. Zugangssystem nach Anspruch 4 oder 5,
**dadurch gekennzeichnet, dass** das Zugangsmodul (2) dazu ausgebildet ist, für wenigstens ein Bedienelement (5) einen Parameterwert zu speichern und die Ausgänge (6.1 bis 6.n) bei einer Verwendung des Bedienelements (5) entsprechend des für das Bedienelement (5) gespeicherten Parameterwertes einzustellen.

7. Zugangssystem nach einem der Ansprüche 4 bis 6,
**dadurch gekennzeichnet, dass** das Zugangsmodul (2) dazu ausgebildet ist, dem Berechtigungsniveau eines Bedienelements (5) eine Funktion zuzuordnen und die Ausgänge (6.1 bis 6.n) entsprechend dieser Funktion einzustellen.

8. Zugangssystem nach einem der vorhergehenden Ansprüche,
**dadurch gekennzeichnet, dass** das Zugangsmodul (2) dazu ausgebildet ist, wenigstens einen Einstellungsparameter zu einer direkten Einstellung der technischen Anlage (1) in Abhängigkeit von der Drehstellung der Drehvorrichtung auszugeben, sofern diese Drehstellung in der Drehstellungsmenge enthalten ist, die dem Berechtigungsniveau des Bedienelements (5) zugeordnet ist.

9. Zugangssystem nach einem der vorhergehenden Ansprüche,
**dadurch gekennzeichnet, dass** die Drehvorrichtung zu einer Aufnahme eines Bedienelements (5) ausgebildet ist und das Zugangsmodul (2) dazu ausgebildet ist, bei einer Aufnahme eines Bedienelements (5) in der Drehvorrichtung wenigstens einen Einstellungsparameter zu einer Einstellung der technischen Anlage (1) auszugeben.

10. Verfahren zum Einstellen einer technischen Anlage (1) mittels eines Zugangssystems nach einem der vorhergehenden Ansprüche, wobei
- verschiedenen Drehstellungen der Drehvorrichtung jeweils eine Einstellung der technischen Anlage (1) zugeordnet wird,
- einem Berechtigungsniveau eine Einstellungsmenge von Einstellungen der technischen Anlage (1) zugeordnet wird,
- das Berechtigungsniveau eines Bedienelements (5) mittels des Zugangsmoduls (2) ausgelesen wird,
- und die technische Anlage (1) entsprechend einer Drehstellung der Drehvorrichtung eingestellt wird, sofern diese Drehstellung einer Einstellung der technischen Anlage (1) zugeordnet ist, die in der Einstellungsmenge enthalten ist, die dem ausgelesenen Berechtigungsniveau zugeordnet ist.

11. Verfahren nach Anspruch 10,
**dadurch gekennzeichnet, dass** die Drehstellungen über einen durch Drehen der Drehvorrichtung änderbaren Parameterwert jeweils einer Einstellung der technischen Anlage (1) zugeordnet werden.

12. Verfahren nach Anspruch 11,
**dadurch gekennzeichnet, dass** der Parameterwert als Funktion eines Drehwinkels der Drehung der Drehvorrichtung monoton geändert wird.
